# EUROPÄISCHE PATENTSCHRIFT

(11) **EP 2 131 554 B1**
(45) Veröffentlichungstag und Bekanntmachung des Hinweises auf die Patenterteilung: **25.01.2012**
(21) Anmeldenummer: 09156000.3
(22) Anmeldetag: 24.03.2009
(51) Int. Cl.: H04L 29/06

(54) **Verfahren zum Übertragen von Mediendaten für ausschliesslich legale Inhalte**
Method for transferring media data of legal only contents
Procédé destiné à la transmission de données de médias exclusivement du contenu legal

(30) Priorität: 03.06.2008 DE 102008026625
(43) Veröffentlichungstag der Anmeldung: 09.12.2009
(73) Patentinhaber: Siemens Aktiengesellschaft, 80333 München (DE)
(72) Erfinder: Fries, Steffen, 85598 Baldham (DE); Schattleitner, Angela, 83104 Tuntenhausen (DE)

(56) Entgegenhaltungen:
- EP-A- 1 912 406
- WO-A-03/049357
- WO-A-2007/023286
- GB-A- 2 374 497

## Beschreibung

Die Erfindung betrifft eine Anordnung und ein Verfahren zum Übertragen von Mediendaten.

Aus der GB 2374497 A ist ein Verfahren zum legalen Abhören von IP Verbindungen bekannt. Dabei kommunizieren zwei Terminals über eine, mit einem, aus einem privaten und einem öffentlichen Schlüssel bestehenden, Schlüsselpaar. Zu jedem der Terminals existiert ein Abhörserver, welcher den jeweiligen privaten des jeweiligen Terminals kennt, und damit dessen Kommunikation abhören kann.

Mediendaten sind beispielsweise Videodaten wie Streaming-Video-Daten oder Sprachdaten wie Streaming-Audio-Daten oder VoIP(Voice over IP)-Daten. Beispielsweise VoiP-Daten werden von einem Client oder einer Client-Vorrichtung über einen Provider oder eine Provider-Vorrichtung an einen anderen Client übertragen.

Insbesondere bei VoiP-Daten ist es zweckmäßig, dass die Service-Provider-Vorrichtung oder Provider-Vorrichtung eine Ende-zu-Ende-Verbindung zwischen den beiden Clients aufbaut.

In vielen Ländern existieren bereits gesetzliche Anforderungen oder werden zukünftig existieren, die dem Provider vorschreiben, dass er sicherstellt, dass über die von ihm bereitgestellte Ende-zu-Ende-Verbindung zwischen den Clients nicht Inhalte übertragen werden, die nicht zugelassen, beispielsweise nicht gesetzeskonform sind.

Demnach ist es eine Aufgabe der vorliegenden Erfindung, ausschließlich zugelassene Mediendaten zwischen Client-Vorrichtungen über eine Provider-Vorrichtung zu übertragen.

Erfindungsgemäß wird diese gestellte Aufgabe durch eine Anordnung zum Übertragen von Mediendaten mit den Merkmalen des Patentanspruchs 1 und/oder durch ein Verfahren zum Übertragen von Mediendaten mit den Merkmalen des Patentanspruchs 17 gelöst.

Demgemäß wird eine Anordnung zum Übertragen von Mediendaten vorgeschlagen, mit zumindest zwei Client-Vorrichtungen, einer Provider-Vorrichtung zum Einrichten einer Ende-zu-Ende-Verbindung zwischen den zumindest zwei Client-Vorrichtungen und zum Übertragen der mittels zumindest eines von der Provider-Vorrichtung zugelassenen Schlüssels verschlüsselten Mediendaten mittels des IP-Protokolls über die eingerichtete Ende-zu-Ende-Verbindung, und einem Mittel, welches dazu geeignet ist zu verhindern, dass ein Ende-zu-Ende-geschützter Kanal zwischen den zumindest zwei Client-Vorrichtungen zum Übertragen von mit einem von der Provider-Vorrichtung nicht zugelassenen Schlüssel verschlüsselten Mediendaten aufgebaut wird, dadurch gekennzeichnet,
dass das Mittel aufweist:
- ein erstes Übertragungsmittel, welches dazu eingerichtet ist, die Mediendaten mit einem ersten Schlüssel zu verschlüsseln und zu entschlüsseln und die mit dem ersten Schlüssel verschlüsselten Mediendaten zu einer ersten Client-Vorrichtung zu übertragen und von dieser zu empfangen;
- ein zweites Übertragungsmittel, welches dazu eingerichtet ist, die Mediendaten mit einem zweiten Schlüssel zu verschlüsseln und zu entschlüsseln und die mit dem zweiten Schlüssel verschlüsselten Mediendaten zu einer zweiten Client-Vorrichtung zu übertragen und von dieser zu empfangen; und
- ein Detektionsmittel, welches zur Bereitstellung eines Detektionsergebnisses detektiert, ob die zwischen den Client-Vorrichtungen übertragenen Mediendaten mit einem anderen Schlüssel als dem zumindest einen von der Provider-Vorrichtung zugelassenen Schlüssel verschlüsselt sind.

Desweiteren wird eine Anordnung zum Übertragen von Mediendaten vorgeschlagen, mit zumindest zwei Client-Vorrichtungen (10, 20), einer Provider-Vorrichtung (30) zum Einrichten einer Ende-zu-Ende-Verbindung (40) zwischen den zumindest zwei Client-Vorrichtungen (10, 20) und zum Übertragen der mittels zumindest eines von der Provider-Vorrichtung (30) zugelassenen Schlüssels (K1, K2) verschlüsselten Mediendaten (MD; MD(K1); MD(K2); MD(C1); MD(C2)) mittels des IP-Protokolls über die eingerichtete Ende-zu-Ende-Verbindung (40) und einem Mittel (50-90), welches dazu geeignet ist, einen Aufbau eines Ende-zu-Ende geschützten Kanals zwischen den zumindest zwei Client-Vorrichtungen (10, 20) zum Übertragen von mit einem von der Provider-Vorrichtung (30) nicht zugelassenen Schlüssel verschlüsselten Mediendaten (MD; MD(K1); MD(K2); MD(C1); MD(C2)) zu verhindern,
dadurch gekennzeichnet,
dass das Mittel (60) aufweist:
- ein erstes Übertragungsmittel (61), welches dazu eingerichtet ist, die Mediendaten (MD) mittels eines ersten Codec (C1) zu codieren und zu decodieren und die mit dem ersten Codec (C1) codierten Mediendaten (MD(C1)) zu einer ersten Client-Vorrichtung (10) zu übertragen und von dieser (10) zu empfangen;
- ein zweites Übertragungsmittel (62), welches dazu eingerichtet ist, die Mediendaten (MD) mittels eines zweiten Codec (C2) zu codieren und zu decodieren und die mit dem zweiten Codec (C2) codierten Mediendaten (MD(C2)) zu einer zweiten Client-Vorrichtung (20) zu übertragen und von dieser (20) zu empfangen; und
- ein Umcodier-Mittel (63), welches dazu geeignet ist, die mit dem ersten Codec (C1) codierten Mediendaten (MD(C1)) auf den zweiten Codec (C2) umzucodieren und die mit dem zweiten Codec (C2) codierten Mediendaten (MD(C2)) auf den ersten Codec (C1) umzucodieren.

Desweiteren wird eine Anordnung zum Übertragen von Mediendaten vorgeschlagen, mit zumindest zwei Client-Vorrichtungen (10, 20), einer Provider-Vorrichtung (30) zum Einrichten einer Ende-zu-Ende-Verbindung (40) zwischen den zumindest zwei Client-Vorrichtungen (10, 20) und zum Übertragen der mittels zumindest eines von der Provider-Vorrichtung (30) zugelassenen Schlüssels (K1, K2) verschlüsselten Mediendaten (MD; MD(K1); MD(K2); MD(C1);
MD(C2)) mittels des IP-Protokolls über die eingerichtete Ende-zu-Ende-Verbindung (40) und einem Mittel (50-90), welches dazu geeignet ist, einen Aufbau eines Ende-zu-Ende geschützten Kanals zwischen den zumindest zwei Client-Vorrichtungen (10, 20) zum Übertragen von mit einem von der Provider-Vorrichtung (30) nicht zugelassenen Schlüssel verschlüsselten Mediendaten (MD; MD(K1); MD(K2); MD(C1); MD(C2)) zu verhindern,
dadurch gekennzeichnet,
dass das Mittel (70) aufweist:
- ein erstes Übertragungsmittel (71), welches dazu eingerichtet ist, die Mediendaten (MD; MD(K1); MD(K2); MD(C1); MD(C2)) mit einer ersten Paketierung (P1) der Pakete des IP-Protokolls zu einer ersten Client-Vorrichtung (10) zu übertragen und von dieser (10) zu empfangen;
- ein zweites Übertragungsmittel (72), welches dazu eingerichtet ist, die Mediendaten (MD; MD(K1); MD(K2); MD(C1); MD(C2)) mit einer zweiten Paketierung (P2) der Pakete des IP-Protokolls zu einer zweiten Client-Vorrichtung (20) zu übertragen und von dieser (20) zu empfangen; und
- ein Umpaketier-Mittel (73), welches dazu eingerichtet ist, die mit der ersten Paketierung (P1) paketierten Mediendaten (MD(P1)) auf die zweite Paketierung (P2) umzupaketieren und die mit der zweiten Paketierung (P2) paketierten Mediendaten (MD(P2)) auf die erste Paketierung (P1) umzupaketieren.

Schließlich wird ein Verfahren zum Übertragen von Mediendaten vorgeschlagen, welches folgende Schritte aufweist:a) Einrichten einer Ende-zu-Ende-Verbindung (40) zwischen zumindest zwei Client-Vorrichtungen (10, 20) über eine Provider-Vorrichtung (30);
b) Übertragen der mittels zumindest eines von der Provider-Vorrichtung zugelassenen Schlüssels (K1, K2) verschlüsselten Mediendaten (MD; MD(K1); MD(K2); MD(C1); MD(C2)) über die eingerichtete Ende-zu-Ende-Verbindung (40); und c) Bereitstellen eines Mittels (50-90), welches dazu geeignet ist, einen Aufbau eines Ende-zu-Ende geschützten Kanals zwischen den zumindest zwei Client-Vorrichtungen (10, 20) zum Übertragen von mit einem von der Provider-Vorrichtung (30) nicht zugelassenen Schlüssel verschlüsselten Mediendaten (MD; MD(K1); MD(K2); MD(C1); MD(C2)) zu verhindern,
dadurch gekennzeichnet,
dass das Mittel (50) aufweist:
- ein erstes Übertragungsmittel (51), welches dazu eingerichtet ist, die Mediendaten (MD) mit einem ersten Schlüssel (K1) zu verschlüsseln und zu entschlüsseln und die mit dem ersten Schlüssel (K1) verschlüsselten Mediendaten MD(K1) zu einer ersten Client-Vorrichtung (10) zu übertragen und von dieser (10) zu empfangen;
- ein zweites Übertragungsmittel (52), welches dazu eingerichtet ist, die Mediendaten (MD) mit einem zweiten Schlüssel (K2) zu verschlüsseln und zu entschlüsseln und die mit dem zweiten Schlüssel (K2) verschlüsselten Mediendaten (MD(K2)) zu einer zweiten Client-Vorrichtung (20) zu übertragen und von dieser (20) zu empfangen; und
- ein Detektionsmittel (53), welches zur Bereitstellung eines Detektionsergebnisses (E) detektiert, ob die zwischen den Client-Vorrichtungen (10, 20) übertragenen Mediendaten (MD; MD(K1); MD(K2); MD(C1); MD(C2)) mit einem anderen Schlüssel als dem zumindest einen von der Provider-Vorrichtung (30) zugelassenen Schlüssel (K1, K2) verschlüsselt sind;
oder dass das Mittel (50) aufweist:
- ein erstes Übertragungsmittel (61), welches dazu eingerichtet ist, die Mediendaten (MD) mittels eines ersten Codec (C1) zu codieren und zu decodieren und die mit dem ersten Codec (C1) codierten Mediendaten (MD(C1)) zu einer ersten Client-Vorrichtung (10) zu übertragen und von dieser (10) zu empfangen;
- ein zweites Übertragungsmittel (62), welches dazu eingerichtet ist, die Mediendaten (MD) mittels eines zweiten Codec (C2) zu codieren und zu decodieren und die mit dem zweiten Codec (C2) codierten Mediendaten (MD(C2)) zu einer zweiten Client-Vorrichtung (20) zu übertragen und von dieser (20) zu empfangen; und
- ein Umcodier-Mittel (63), welches dazu geeignet ist, die mit dem ersten Codec (C1) codierten Mediendaten (MD(C1)) auf den zweiten Codec (C2) umzucodieren und die mit dem zweiten Codec (C2) codierten Mediendaten (MD(C2)) auf den ersten Codec (C1) umzucodieren;
   oder dass das Mittel (50) aufweist:
- ein erstes Übertragungsmittel (71), welches dazu eingerichtet ist, die Mediendaten (MD; MD(K1); MD(K2); MD(C1); MD(C2)) mit einer ersten Paketierung (P1) der Pakete des IP-Protokolls zu einer ersten Client-Vorrichtung (10) zu übertragen und von dieser (10) zu empfangen;
- ein zweites Übertragungsmittel (72), welches dazu eingerichtet ist, die Mediendaten (MD; MD(K1); MD(K2); MD(C1); MD(C2)) mit einer zweiten Paketierung (P2) der Pakete des IP-Protokolls zu einer zweiten Client-Vorrichtung (20) zu übertragen und von dieser (20) zu empfangen; und
- ein Umpaketier-Mittel (73), welches dazu eingerichtet ist, die mit der ersten Paketierung (P1) paketierten Mediendaten (MD(P1)) auf die zweite Paketierung (P2) umzupaketieren und die mit der zweiten Paketierung (P2) paketierten Mediendaten (MD(P2)) auf die erste Paketierung (P1) umzupaketieren.

Der Kern der vorliegenden Erfindung liegt darin, ein Mittel vorzusehen, welches einen Aufbau eines durch Verschlüsselung mit einem nicht zugelassenen Schlüssel Ende-zu-Ende-geschützten Kanals zwischen den zumindest zwei Client-Vorrichtungen verhindert. Das Mittel ist vorzugsweise der Provider-Vorrichtung zugeordnet oder Teil derer.

In diesem Zusammenhang hat die Anmelderin Folgendes festgestellt: Falls die Mediendaten zwischen den beiden Client-Vorrichtungen oder Clients verschlüsselt übertragen werden sollen, hat die Provider-Vorrichtung oder der Provider den Client-Vorrichtungen zumindest einen Schlüssel zur Verschlüsselung der Mediendaten bereitzustellen. Dabei setzt die Provider-Vorrichtung mindestens ein Schlüssel-Management-Protokoll ein, das geeignet ist, Schlüssel für die Transportverschlüsselung von Mediendaten bereitzustellen, wie zum Beispiel MIKEY (Multimedia Internet Keying) oder SDES (Session Description Protocol Security Descriptions for Media Streams).

Mittels der bereitgestellten Schlüssel könnten die Clients in die Lage versetzt sein, einen durch Verschlüsselung mit einem nicht zugelassenen Schlüssel Ende-zu-Ende-geschützten Kanal zwischen ihnen über die Provider-Vorrichtung aufzubauen oder einzurichten. Über diesen durch Verschlüsselung mit einem nicht zugelassenen Schlüssel Ende-zu-Ende-geschützten Kanal könnten dann die Client-Vorrichtungen auch nicht-zugelassene Daten übertragen, die einen gesetzeswidrigen Inhalt aufweisen.

Im Sinne der vorliegenden Anmeldung ist ein zugelassener Schlüssel ein dem Provider oder der Provider-Vorrichtung bekannter Schlüssel. Demgegenüber ist im Sinne der vorliegenden Anmeldung ein nicht-zugelassener Schlüssel ein dem Provider oder der Provider-Vorrichtung unbekannter Schlüssel.

In diesem Sinne sind nicht-zugelassene Daten solche Daten, die mit einem nicht-zugelassenen Schlüssel verschlüsselt sind.

Um der Gefahr vorzubeugen, dass nicht-zugelassene Daten über einen Ende-zu-Ende-geschützten Kanal übertragen werden, kommt das erfindungsgemäße Mittel zum Einsatz, welches den Aufbau eines solchen Ende-zu-Ende-geschützten Kanals zwischen den zumindest zwei Client-Vorrichtungen verhindert.

Vorteilhafte Ausgestaltungen und Weiterbildungen der Erfindung ergeben sich aus den Unteransprüchen sowie der Beschreibung unter Bezugnahme auf die Zeichnungen.

Gemäß einer weiteren bevorzugten Weiterbildung hat das Mittel ein Terminierungsmittel, welches in Abhängigkeit des bereitgestellten Detektionsergebnisses die zwischen den zumindest zwei Client-Vorrichtungen eingerichtete Ende-zu-Ende-Verbindung terminiert.

Gemäß einer weiteren bevorzugten Weiterbildung hat das Mittel ein Umschlüsselungsmittel, welches dazu eingerichtet ist, von der ersten Client-Vorrichtung empfangene, mit dem ersten Schlüssel verschlüsselte Mediendaten auf mit dem zweiten Schlüssel verschlüsselte Mediendaten zur Übertragung an die zweite Client-Vorrichtung umzuschlüsseln und von der zweiten Client-Vorrichtung empfangene, mit dem zweiten Schlüssel verschlüsselte Mediendaten auf mit dem ersten Schlüssel verschlüsselte Mediendaten zur Übertragung an die erste Client-Vorrichtung umzuschlüsseln.

Gemäß einer bevorzugten Ausgestaltung der Erfindung werden die Mediendaten bei der Verschlüsselung mittels des ersten Schlüssels und/oder des zweiten Schlüssels mittels eines kryptographischen Verschlüsselungsverfahrens verschlüsselt.

Gemäß einer weiteren bevorzugten Ausgestaltung ist das Umcodier-Mittel zwischen dem ersten Übertragungsmittel und dem zweiten Übertragungsmittel gekoppelt.

Gemäß einer weiteren bevorzugten Ausgestaltung ist das Umcodier-Mittel dazu geeignet, von der ersten Client-Vorrichtung empfangene, mit dem ersten Codec codierte Mediendaten auf den zweiten Codec zur Übertragung an die zweite Client-Vorrichtung umzucodieren und von der zweiten Client-Vorrichtung empfangene, mit dem zweiten Codec codierte Mediendaten auf den ersten Codec zur Übertragung an die erste Client-Vorrichtung umzucodieren.

Gemäß einer weiteren bevorzugten Ausgestaltung ist einer der beiden Codecs verlustbehaftet.

Gemäß einer weiteren bevorzugten Ausgestaltung sind die Pakete der Mediendaten mittels einer vorbestimmten Verschlüsselung unter Verwendung eines Initialisierungswertes oder eines Initialisierungsvektors verschlüsselt.

Gemäß einer weiteren bevorzugten Ausgestaltung ist die vorbestimmte Verschlüsselung eine Block-Chiffre im Verkettungsmode oder eine Strom-Chiffre. Unter der Voraussetzung, dass die Pakete der Mediendaten mittels einer Block-Chiffre im Verkettungsmode oder einer Strom-Chiffre unter Verwendung eines Initialisierungswertes verschlüsselt sind, führt die Umpaketierung der Daten dazu, dass unzulässig verschlüsselte Daten oder nicht-zugelassene Daten nach der Umpaketierung nicht mehr entschlüsselt werden können.

Gemäß einer weiteren bevorzugten Ausgestaltung ist die Provider-Vorrichtung dazu eingerichtet, mittels zumindest eines Schlüssel-Management-Protokolls den Client-Vorrichtungen den zumindest einen Schlüssel zur Verschlüsselung der Mediendaten bereitzustellen.

Gemäß einer weiteren bevorzugten Ausgestaltung ist das Schlüssel-Management-Protokoll DTLS (Datagram Transport Layer Security).

Gemäß einer weiteren bevorzugten Ausgestaltung werden die Mediendaten mittels zumindest eines verschlüsselten Übertragungsprotokolls, insbesondere mittels SRTP (Secure Real-time Transport Protocol) zwischen den zumindest zwei Client-Vorrichtungen übertragen.

Weiter wird ein Computerprogramm-Produkt vorgeschlagen, welches auf einer programmgesteuerten Einrichtung die Durchführung eines wie oben beschriebenen Verfahrens gemäß der Erfindung veranlasst.

Ein Computerprogramm-Produkt wie ein Computerprogramm-Mittel kann beispielsweise als Speichermedium, wie Speicherkarte, USB-Stick, Floppy, CD-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Die Erfindung wird nachfolgend anhand der in den schematischen Figuren angegebenen Ausführungsbeispielen näher erläutert. Es zeigen:
- Figur 1: ein schematisches Blockschaltbild eines ersten Ausführungsbeispiels einer An- ordnung zum Übertragen von Mediendaten;
- Figur 2: ein schematisches Blockschaltbild eines zweiten Ausführungsbeispiels einer erfindungsgemäßen An- ordnung zum Übertragen von Mediendaten;

- Figur 3: ein schematisches Blockschaltbild eines dritten Ausführungsbeispiels einer erfindungsgemäßen An- ordnung zum Übertragen von Mediendaten;
- Figur 4: ein schematisches Blockschaltbild eines vierten Ausführungsbeispiels einer erfindungsgemäßen An- ordnung zum Übertragen von Mediendaten;
- Figur 5: ein schematisches Blockschaltbild eines fünften Ausführungsbeispiels einer erfindungsgemäßen An- ordnung zum Übertragen von Mediendaten;
- Figur 6: ein schematisches Blockschaltbild eines sechsten Ausführungsbeispiels einer erfindungsgemäßen An- ordnung zum Übertragen von Mediendaten; und
- Figur 7: ein schematisches Ablaufdiagramm eines Ausfüh- rungsbeispiels des erfindungsgemäßen Verfahrens zum Übertragen von Mediendaten.

In allen Figuren sind gleiche bzw. funktionsgleiche Mittel und Einrichtungen - sofern nichts anderes angegeben - mit denselben Bezugszeichen versehen.

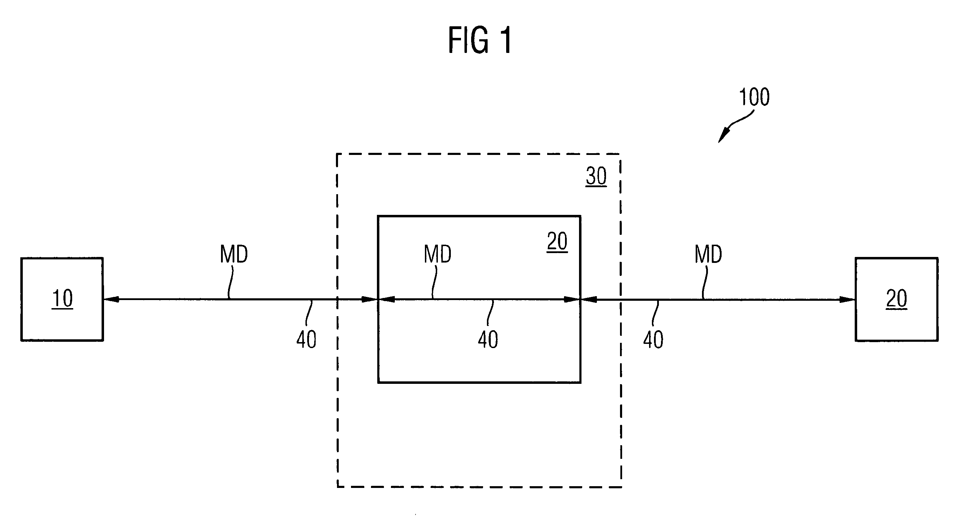

In Figur 1 ist ein schematisches Blockschaltbild eines ersten Ausführungsbeispiels einer Anordnung 100 zum Übertragen von Mediendaten MD dargestellt.

Die Anordnung 100 zum Übertragen von Mediendaten MD weist zumindest zwei Client-Vorrichtungen 10, 20, eine Provider-Vorrichtung 30 oder Service-Provider-Vorrichtung und ein Mittel 50-90 auf.

Die Provider-Vorrichtung 30 ist dazu eingerichtet, eine Ende-zu-Ende-Verbindung 40 zwischen den zumindest zwei Client-Vorrichtungen 10, 20 einzurichten und mittels zumindest eines von der Provider-Vorrichtung 30 zugelassenen Schlüssels K1, K2 verschlüsselte Mediendaten (MD; MD(K1); MD(K2)) mittels des IP-Protokolls über die eingerichtete Ende-zu-Ende-Verbindung 40 zu übertragen. Ferner ist das Mittel 50-90 dazu geeignet, einen Aufbau eines Ende-zu-Ende-geschützten Kanals zwischen den zumindest zwei Client-Vorrichtungen 10, 20 zum Übertragen von mit einem von der Provider-Vorrichtung 30 nicht-zugelassenen Schlüssel verschlüsselten Daten oder Mediendaten MD zu verhindern.

Vorzugsweise ist die Provider-Vorrichtung 30 dazu eingerichtet, mittels zumindest eines Schlüssel-Management-Protokolls den Client-Vorrichtungen 10, 20 den zumindest einen Schlüssel K1, K2 zur Verschlüsselung der Mediendaten MD bereitzustellen. Dabei kann das Schlüssel-Management-Protokoll beispielsweise MIKEY oder SDES.

Vorzugsweise werden die Mediendaten MD mittels zumindest eines verschlüsselten Übertragungsprotokolls, insbesondere mittels SRTP (Secure Real-Time Transport Protocol), zwischen den zumindest zwei Client-Vorrichtungen 10, 20 übertragen.

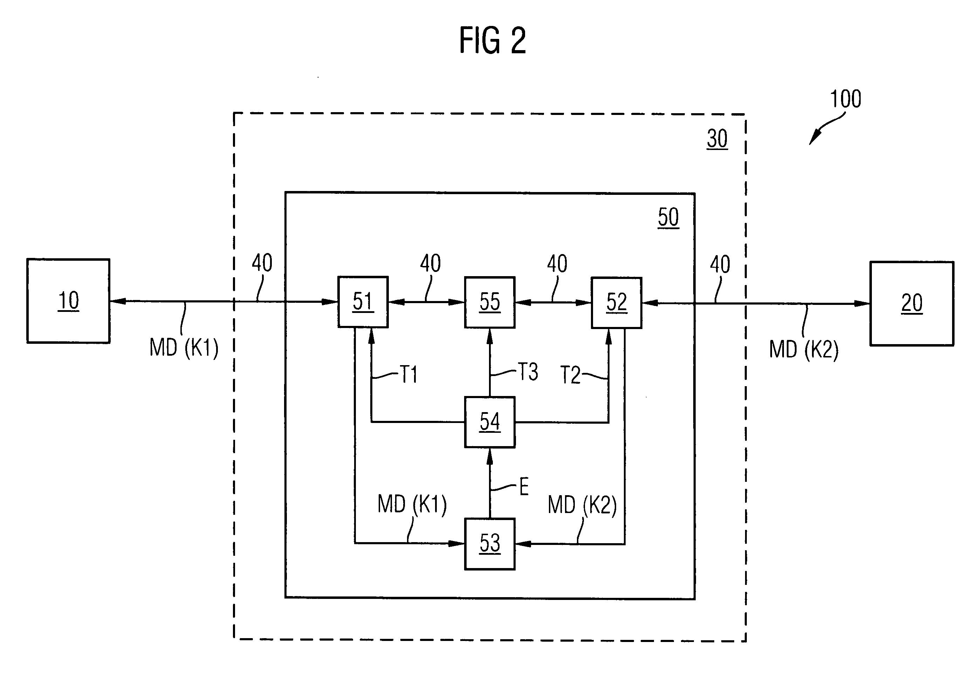

Die Figuren 2 bis 6 zeigen Ausgestaltungen der in Figur 1 dargestellten Anordnung 100 zum Übertragen von Mediendaten MD. Folglich weisen die Anordnungen 100 nach den Figuren 2 bis 6 die Merkmale der Anordnung 100 nach Figur 1 auf.

Dabei zeigt Figur 2 ein schematisches Blockschaltbild eines zweiten Ausführungsbeispiels der Anordnung 100 zum Übertragen der Mediendaten MD.

Dabei weist das Mittel 50 zum Verhindern des Aufbaus eines Ende-zu-Ende-geschützten Kanals zwischen den Client-Vorrichtungen 10, 20 ein erstes Übertragungsmittel 51, ein zweites Übertragungsmittel 52 und ein Detektionsmittel 53 auf.

Das erste Übertragungsmittel 51 ist dazu eingerichtet, die Mediendaten MD mit einem ersten Schlüssel K1 zu verschlüsseln und zu entschlüsseln und die mit dem ersten Schlüssel K1 verschlüsselten Mediendaten MD(K1) zu einer ersten Client-Vorrichtung 10 zu übertragen und von dieser 10 zu empfangen.

Weiter ist das zweite Übertragungsmittel dazu eingerichtet, die Mediendaten MD mit einem zweiten Schlüssel K2 zu verschlüsseln und zu entschlüsseln und die mit dem zweiten Schlüssel K2 verschlüsselten Mediendaten MD(K2) zu einer zweiten Client-Vorrichtung 20 zu übertragen und von dieser 20 zu empfangen.

Des Weiteren ist das Detektionsmittel 53 dazu eingerichtet, zur Bereitstellung eines Detektionsergebnisses E zu detektieren, ob die zwischen den Client-Vorrichtungen 10, 20 übertragenen Mediendaten MD(K1), MD(K2) mit einem anderen Schlüssel als dem zumindest einen von der Provider-Vorrichtung 30 zugelassenen Schlüssel K1, K2 verschlüsselt sind.

Dabei kann das Detektionsmittel 53 insbesondere zufällig die zwischen den Client-Vorrichtungen 10, 20 ausgetauschten Mediendaten MD untersuchen. Somit kann das Detektionsmittel 53 sicherstellen, dass die Mediendaten MD, welche beispielsweise als Medienstrom ausgebildet sind, nicht von einem anderen als den zugelassenen Mitteln K1, K2 gesichert sind. Vorzugsweise detektiert das Detektionsmittel 53 dabei den Inhalt der Mediendaten MD selbst oder spezielle Datenstrukturen, wie Teile von Codec-Headern oder dergleichen.

Ferner kann das Mittel 50 ein Terminierungsmittel 54 aufweisen, welches in Abhängigkeit des bereitgestellten Detektionsergebnisses E die zwischen den zumindest zwei Client-Vorrichtungen 10, 20 eingerichtete Ende-zu-Ende-Verbindung 40 terminiert.

Dazu kann das Terminierungsmittel 54 in Abhängigkeit des bereitgestellten Detektionsergebnisses E ein jeweiliges Terminierungssignal T1-T3 bereitstellen. Beispielsweise ist das erste Terminierungssignal T1 dazu geeignet, das erste Übertragungsmittel 51 derart zu triggern, dass dieses einen mit der ersten Client-Vorrichtung 10 aufgebauten Kanal oder Verbindung unterbricht. Analoges gilt für das zweite Terminierungssignal T2 und das zweite Übertragungsmittel 52 bzw. für das dritte Terminierungssignal T3 und ein vorgesehenes Umschlüsselungsmittel 55.

Das Umschlüsselungsmittel 55 des Mittels 50 ist dabei insbesondere dazu geeignet, von der ersten Client-Vorrichtung 10 empfangene, mit dem ersten Schlüssel K1 verschlüsselte Mediendaten MD(K1) auf mit dem zweiten Schlüssel K2 verschlüsselte Mediendaten MD(K2) zur Übertragung an die zweite Client-Vorrichtung 20 umzuschlüsseln und von der zweiten Client-Vorrichtung 20 empfangene, mit dem zweiten Schlüssel K2 verschlüsselte Mediendaten MD(K2) auf die mit dem ersten Schlüssel K1 verschlüsselten Mediendaten MD(K1) zur Übertragung an die erste Client-Vorrichtung 10 umzuschlüsseln. Dabei ist das Umschlüsselungsmittel 55 vorzugsweise zwischen den beiden Übertragungsmitteln 51, 52 gekoppelt.

Vorzugsweise werden die Mediendaten MD bei der Verschlüsselung mittels des ersten Schlüssels K1 und/oder des zweiten Schlüssels K2 mittels eines kryptographischen Verschlüsselungsverfahrens verschlüsselt.

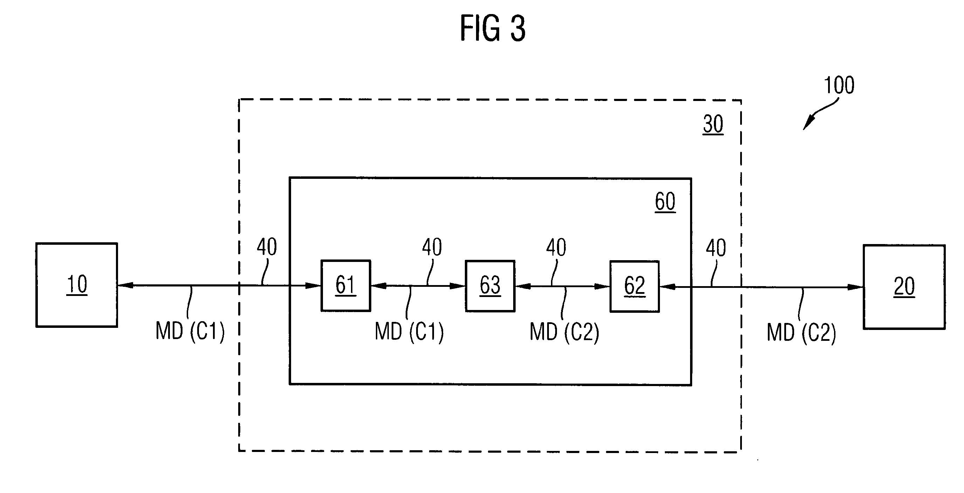

Weiter zeigt Figur 3 ein schematisches Blockschaltbild eines dritten Ausführungsbeispiels der erfindungsgemäßen Anordnung 100 zum Übertragen von Mediendaten MD.

Dabei weist das Mittel 60 zum Verhindern eines Aufbaus eines Ende-zu-Ende-geschützten Kanals zwischen den Client-Vorrichtungen 10, 20 ein erstes Übertragungsmittel 61, ein zweites Übertragungsmittel 62 und ein Umcodier-Mittel 63 auf.

Das erste Übertragungsmittel 61 ist dazu geeignet, die Mediendaten MD mittels eines ersten Codec C1 zu codieren und zu decodieren und die mit dem ersten Codec C1 codierten Mediendaten MD(C1) zu einer ersten Client-Vorrichtung 10 zu übertragen und von dieser 10 zu empfangen.

Das zweite Übertragungsmittel 62 ist dazu geeignet, die Mediendaten MD mittels eines zweiten Codec C2 zu codieren und zu decodieren und die mit dem zweiten Codec C2 codierten Mediendaten MD(C2) zu einer zweiten Client-Vorrichtung 20 zu übertragen und von dieser 20 zu empfangen.

Ferner ist das Umcodier-Mittel 63 dazu geeignet, die mit dem ersten Codec C1 codierten Mediendaten MD(C1) auf den zweiten Codec C2 umzucodieren und die mit dem zweiten Codec C2 codierten Mediendaten MD(C2) auf den ersten Codec C1 umzucodieren.

Vorzugsweise ist das Umcodier-Mittel 63 zwischen dem ersten Übertragungsmittel 61 und dem zweiten Übertragungsmittel 62 gekoppelt. Ferner ist das Umcodier-Mittel 63 insbesondere dazu geeignet, von der ersten Client-Vorrichtung 10 empfangene, mit dem ersten Codec C1 codierte Mediendaten MD(C1) auf den zweiten Codec C2 zur Übertragung an die zweite Client-Vorrichtung 20 umzucodieren und von der zweiten Client-Vorrichtung 20 empfangene, mit dem zweiten Codec C2 codierte Mediendaten MD(C2) auf den ersten Codec C1 zur Übertragung an die erste Client-Vorrichtung 10 umzucodieren.

Geeignete Beispiele für den ersten Codec C1 und den zweiten Codec C2 sind G.711 und G.728. Vorzugsweise ist einer der Codecs C1, C2 ein verlustbehafteter Codec. Falls ein Ende-zu-Ende-geschützter Kanal zwischen den zumindest zwei Client-Vorrichtungen 10, 20 aufgebaut oder eingerichtet wäre, würde dieser Kanal die Umcodierung von dem ersten Codec C1 auf den zweiten Codec C2 insbesondere aufgrund der unterschiedlichen Komprimierung nicht überstehen. Somit ist der Aufbau eines Ende-zu-Ende-geschützten Kanals zwischen den zumindest zwei Client-Vorrichtungen 10, 20 verhindert.

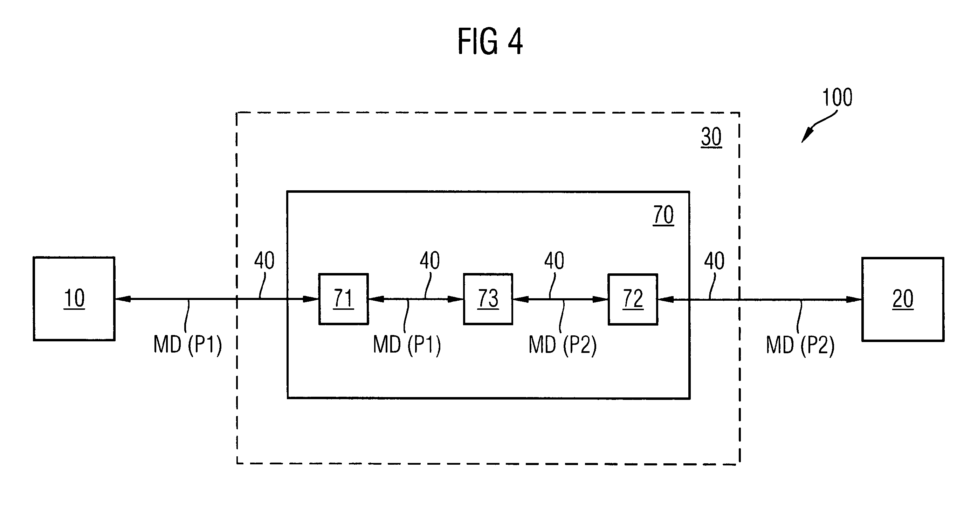

Weiter zeigt Figur 4 ein schematisches Blockschaltbild eines vierten Ausführungsbeispiels der erfindungsgemäßen Anordnung 100 zum Übertragen von Mediendaten MD.

Dabei hat das erfindungsgemäße Mittel 70 zum Verhindern des Aufbaus eines Ende-zu-Ende-geschützten Kanals zwischen den zumindest zwei Client-Vorrichtungen 10, 20 ein erstes Übertragungsmittel 71, ein zweites Übertragungsmittel 72 und ein Umpaketier-Mittel 73.

Das erste Übertragungsmittel 71 ist dazu eingerichtet, die Mediendaten MD mit einer ersten Paketierung P1 der Pakete des IP-Protokolls zu einer ersten Client-Vorrichtung 10 zu übertragen und von dieser 10 zu empfangen.

Des Weiteren ist das zweite Übertragungsmittel 72 dazu eingerichtet, die Mediendaten MD mit einer zweiten Paketierung P2 der Pakete des IP-Protokolls zu einer zweiten Client-Vorrichtung 20 zu übertragen und von dieser zu empfangen.

Weiter ist das Umpaketier-Mittel 73 dazu eingerichtet, die mit der ersten Paketierung P1 paketierten Mediendaten MD(P1) auf die zweite Paketierung P2 umzupaketieren und die mit der zweiten Paketierung P2 paketierten Mediendaten MD(P2) auf die erste Paketierung P1 umzupaketieren.

Vorzugsweise sind die Pakete der Mediendaten MD(P1), MD(P2) mittels einer vorbestimmten Verschlüsselung unter Verwendung eines Initialisierungswertes oder eines Initialisierungsvektors verschlüsselt. Vorzugsweise ist dabei die vorbestimmte Verschlüsselung eine Block-Chiffre im Verkettungsmode oder eine Strom-Chiffre.

Ein zwischen den zumindest zwei Client-Vorrichtungen 10, 20 aufgebauter oder eingerichteter Ende-zu-Ende-geschützter Kanal mit einem von der Provider-Vorrichtung 30 nicht-zugelassenen Schlüssel oder vergleichbarem Mittel würde die Umpaketierung nicht überstehen, insbesondere wenn die Verschlüsselung auf der Verwendung eines Initialisierungswertes oder eines Initialisierungsvektors basiert.

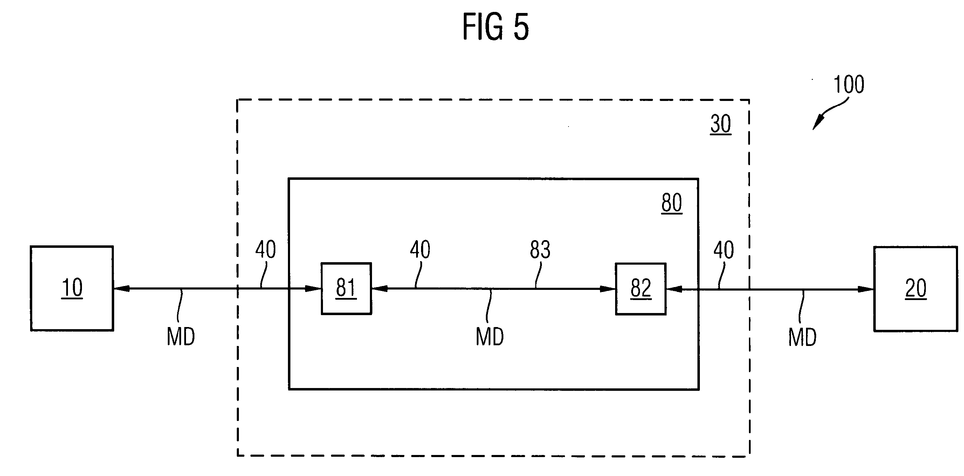

In Figur 5 ist ein schematisches Blockschaltbild eines fünften Ausführungsbeispiels der erfindungsgemäßen Anordnung 100 zum Übertragen der Mediendaten MD dargestellt.

Das fünfte Ausführungsbeispiel der Anordnung 100 hat als Mittel 80 zumindest zwei Gateways 81, 82. Das jeweilige Gateway 81, 82 ist dazu eingerichtet, die verschlüsselten Mediendaten MD mittels des IP-Protokolls zu der jeweiligen Client-Vorrichtung 10, 20 zu übertragen und von dieser 10, 20 zu empfangen. Dabei ist ein erstes Gateway 81 mit der ersten Client-Vorrichtung 10 gekoppelt und ein zweites Gateway 82 ist mit der zweiten Client-Vorrichtung 20 gekoppelt. Ferner sind die beiden Gateways 81, 82 dazu eingerichtet, die Mediendaten MD untereinander ausschließlich leitungsverbunden auszutauschen.

Insbesondere ist eine Festnetz-Leitung 83 oder PSTN (Public Switched Telephone Network)-Leitung zur leitungsverbundenen Übertragung der verschlüsselten Mediendaten MD zwischen den Gateways 81, 82 verbunden. Über diese Festnetz-Leitung 83 ist ein Ende-zu-Ende-geschützter Kanal zwischen den beiden Client-Vorrichtungen 10, 20 verhindert.

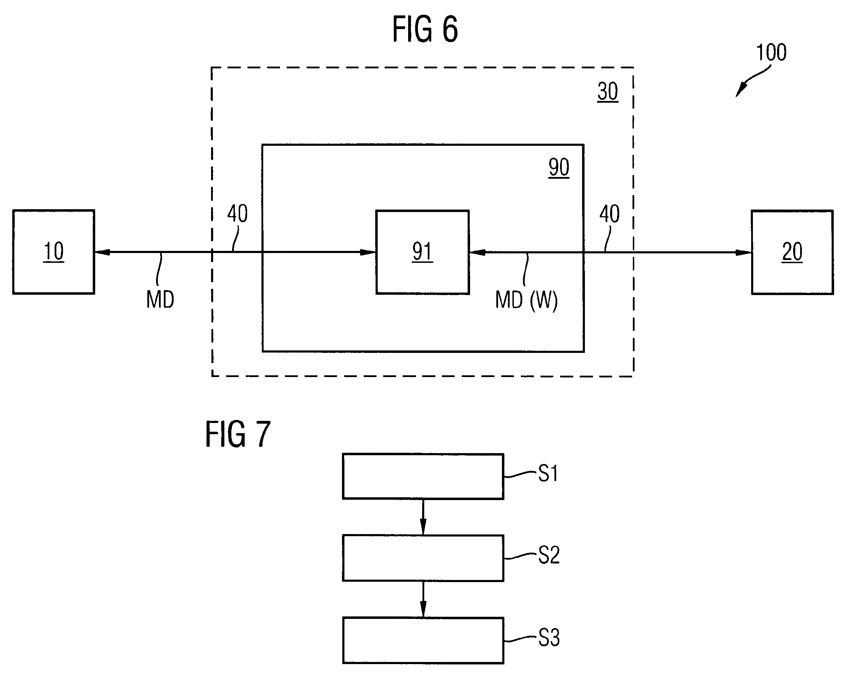

Weiter zeigt Figur 6 ein schematisches Blockschaltbild eines sechsten Ausführungsbeispiels der erfindungsgemäßen Anordnung 100 zum Übertragen der Mediendaten MD.

Dabei hat das Mittel 90 zur Verhinderung des Aufbaus eines Ende-zu-Ende-geschützten Kanals zwischen den zumindest zwei Client-Vorrichtungen 10, 20 ein Markierungsmittel 91. Das Markierungsmittel 91 ist dazu eingerichtet, die von einer ersten Client-Vorrichtung 10 empfangenen, Mediendaten MD mit einem digitalen Wasserzeichen W zu versehen und die mit dem digitalen Wasserzeichen W versehenen, verschlüsselten Mediendaten MD(W) zumindest an eine zweite Client-Vorrichtung 20 zu übertragen. Dabei ist das digitale Wasserzeichen W dazu geeignet, die mit einem von der Provider-Vorrichtung 30 nicht-zugelassenen Schlüssel oder dergleichen verschlüsselten Mediendaten MD(K3) unentschlüsselbar zu machen. Durch das Unentschlüsselbarmachen der Mediendaten MD(K3), die mittels eines nicht-zugelassenen K3 Schlüssels verschlüsselt sind, ist der Aufbau eines Ende-zu-Ende-geschützten Kanals zwischen den zumindest zwei Client-Vorrichtungen 10, 20 verhindert.

Figur 7 zeigt ein schematisches Ablaufdiagramm eines Ausführungsbeispiels des erfindungsgemäßen Verfahrens zum Übertragen von Mediendaten MD.

Nachfolgend wird das erfindungsgemäße Verfahren anhand des Blockschaltbildes in Figur 7 mit Bezug auf das Blockschaltbild in Figur 1 erläutert. Das erfindungsgemäße Verfahren gemäß Figur 7 hat die Verfahrensschritte S1-S3:

### Verfahrensschritt S1:

Eine Ende-zu-Ende-Verbindung 40 wird zwischen zumindest zwei Client-Vorrichtungen 10, 20 über eine Provider-Vorrichtung 30 eingerichtet.

### Verfahrensschritt S2:

Die mittels zumindest eines von der Provider-Vorrichtung 30 zugelassenen Schlüssels K1, K2 verschlüsselten Mediendaten MD werden mittels des IP-Protokolls über die eingerichtete Ende-zu-Ende-Verbindung 40 übertragen.

### Verfahrensschritt S3:

Es wird ein Mittel 50-90 bereitgestellt, welches dazu geeignet ist, einen Aufbau eines Ende-zu-Ende-geschützten Kanals zwischen zumindest zwei Client-Vorrichtungen 10, 20 zum Übertragen von mit einem von der Provider-Vorrichtung 30 nicht zugelassenen Schlüssel verschlüsselten Mediendaten oder anderen Daten zu verhindern.

Obwohl die vorliegende Erfindung vorstehend anhand der bevorzugten Ausführungsbeispiele beschrieben wurde, ist es darauf nicht beschränkt, sondern auf vielfältige Art und Weise modifizierbar. Beispielsweise ist es denkbar, die Mittel 60-90 der Figuren 2 bis 6 hinsichtlich ihrer Funktionsweise beliebig zu kombinieren. So ist erfindungsgemäß beispielsweise auch ein Mittel zum Verhindern des Aufbaus eines Ende-zu-Ende-geschützten Kanals zwischen den zumindest zwei Client-Vorrichtungen möglich, welches ein Umcodier-Mittel und ein Umpaketier-Mittel aufweist.

## Patentansprüche

1. Anordnung (100) zum Übertragen von Mediendaten (MD; MD(K1); MD(K2); MD(C1); MD(C2)), mit
zumindest zwei Client-Vorrichtungen (10, 20), einer Provider-Vorrichtung (30) zum Einrichten einer Ende-zu-Ende-Verbindung (40) zwischen den zumindest zwei Client-Vorrichtungen (10, 20) und zum Übertragen der mittels zumindest eines von der Provider-Vorrichtung (30) zugelassenen Schlüssels (K1, K2) verschlüsselten Mediendaten (MD; MD(K1); MD(K2); MD(C1); MD(C2)) mittels des IP-Protokolls über die eingerichtete Ende-zu-Ende-Verbindung (40) und einem Mittel (50-90), welches dazu geeignet ist, einen Aufbau eines Ende-zu-Ende geschützten Kanals zwischen den zumindest zwei Client-Vorrichtungen (10, 20) zum Übertragen von mit einem von der Provider-Vorrichtung (30) nicht zugelassenen Schlüssel verschlüsselten Mediendaten (MD; MD(K1); MD(K2); MD(C1); MD(C2)) zu verhindern,
**dadurch gekennzeichnet,**
**dass** das Mittel (50) aufweist:
- ein erstes Übertragungsmittel (51), welches dazu eingerichtet ist, die Mediendaten (MD) mit einem ersten Schlüssel (K1) zu verschlüsseln und zu entschlüsseln und die mit dem ersten Schlüssel (K1) verschlüsselten Mediendaten MD(K1) zu einer ersten Client-Vorrichtung (10) zu übertragen und von dieser (10) zu empfangen;
- ein zweites Übertragungsmittel (52), welches dazu eingerichtet ist, die Mediendaten (MD) mit einem zweiten Schlüssel (K2) zu verschlüsseln und zu entschlüsseln und die mit dem zweiten Schlüssel (K2) verschlüsselten Mediendaten (MD(K2)) zu einer zweiten Client-Vorrichtung (20) zu übertragen und von dieser (20) zu empfangen; und
- ein Detektionsmittel (53), welches zur Bereitstellung eines Detektionsergebnisses (E) detektiert, ob die zwischen den Client-Vorrichtungen (10, 20) übertragenen Mediendaten (MD; MD(K1); MD(K2); MD(C1); MD(C2)) mit einem anderen Schlüssel als dem zumindest einen von der Provider-Vorrichtung (30) zugelassenen Schlüssel (K1, K2) verschlüsselt sind.

2. Anordnung nach Anspruch 1,
**dadurch gekennzeichnet,**
**dass** das Mittel (50) ein Terminierungsmittel (54) aufweist, welches in Abhängigkeit des bereitgestellten Detektionsergebnisses (E) die zwischen den zumindest zwei Client-Vorrichtungen (10, 20) eingerichtete Ende-zu-Ende-Verbindung (40) terminiert.

3. Anordnung nach Anspruch 2,
**dadurch gekennzeichnet,**
**dass** das Mittel (50) ein Umschlüsselungsmittel (55) aufweist, welches dazu eingerichtet ist, von der ersten Client-Vorrichtung (10) empfangene, mit dem ersten Schlüssel (K1) verschlüsselte Mediendaten (MD(K1)) auf mit dem zweiten Schlüssel (K2) verschlüsselte Mediendaten (MD(K2)) zur Übertragung an die zweite Client-Vorrichtung (20) umzuschlüsseln und von der zweiten Client-Vorrichtung (20) empfangene, mit dem zweiten Schlüssel (K2) verschlüsselte Mediendaten (MD(K2)) auf mit dem ersten Schlüssel (K1) verschlüsselte Mediendaten (MD(K1)) zur Übertragung an die erste Client-Vorrichtung (10) umzuschlüsseln.

4. Anordnung nach Anspruch 2 oder 3,
**dadurch gekennzeichnet,**
**dass** die Mediendaten (MD) bei der Verschlüsselung mittels des ersten Schlüssels (K1) und/oder des zweiten Schlüssels (K2) mittels eines kryptographischen Verschlüsselungsverfahrens verschlüsselt werden.

5. Anordnung (100) zum Übertragen von Mediendaten (MD; MD(K1); MD(K2); MD(C1); MD(C2)), mit
zumindest zwei Client-Vorrichtungen (10, 20), einer Provider-Vorrichtung (30) zum Einrichten einer Ende-zu-Ende-Verbindung (40) zwischen den zumindest zwei Client-Vorrichtungen (10, 20) und zum Übertragen der mittels zumindest eines von der Provider-Vorrichtung (30) zugelassenen Schlüssels (K1, K2) verschlüsselten Mediendaten (MD; MD(K1): MD(K2); MD(C1); MD(C2)) mittels des IP-Protokolls über die eingerichtete Ende-zu-Ende-Verbindung (40) und einem Mittel (50-90), welches dazu geeignet ist, einen Aufbau eines Ende-zu-Ende geschützten Kanals zwischen den zumindest zwei Client-Vorrichtungen (10, 20) zum Übertragen von mit einem von der Provider-Vorrichtung (30) nicht zugelassenen Schlüssel verschlüsselten Mediendaten (MD; MD(K1); MD(K2); MD(C1); MD(C2)) zu verhindern,
**dadurch gekennzeichnet,**
**dass** das Mittel (60) aufweist:
- ein erstes Übertragungsmittel (61), welches dazu eingerichtet ist, die Mediendaten (MD) mittels eines ersten Codec (C1) zu codieren und zu decodieren und die mit dem ersten Codec (C1) codierten Mediendaten (MD(C1)) zu einer ersten Client-Vorrichtung (10) zu übertragen und von dieser (10) zu empfangen;
- ein zweites Übertragungsmittel (62), welches dazu eingerichtet ist, die Mediendaten (MD) mittels eines zweiten Codec (C2) zu codieren und zu decodieren und die mit dem zweiten Codec (C2) codierten Mediendaten (MD(C2)) zu einer zweiten Client-Vorrichtung (20) zu übertragen und von dieser (20) zu empfangen; und
- ein Umcodier-Mittel (63), welches dazu geeignet ist, die mit dem ersten Codec (C1) codierten Mediendaten (MD(C1)) auf den zweiten Codec (C2) umzucodieren und die mit dem zweiten Codec (C2) codierten Mediendaten (MD(C2)) auf den ersten Codec (C1) umzucodieren.

6. Anordnung nach Anspruch 5,
**dadurch gekennzeichnet,**
**dass** das Umcodier-Mittel (63) zwischen dem ersten Übertragungsmittel (61) und dem zweiten Übertragungsmittel (62) gekoppelt ist.

7. Anordnung nach Anspruch 5 oder 6,
**dadurch gekennzeichnet,**
**dass** das Umcodier-Mittel (63) dazu geeignet ist, von der ersten Client-Vorrichtung (10) empfangene, mit dem ersten Codec (C1) codierte Mediendaten (MD(C1)) auf den zweiten Codec (C2) zur Übertragung an die zweite Client-Vorrichtung (20) umzucodieren und von der zweiten Client-Vorrichtung (20) empfangene, mit dem zweiten Codec (C2) codierte Mediendaten (MD(C2)) auf den ersten Codec (C1) zur Übertragung an die erste Client-Vorrichtung (10) umzucodieren.

8. Anordnung (100) zum Übertragen von Mediendaten (MD; MD(K1); MD(K2); MD(C1): MD(C2)), mit
zumindest zwei Client-Vorrichtungen (10, 20), einer Provider-Vorrichtung (30) zum Einrichten einer Ende-zu-Ende-Verbindung (40) zwischen den zumindest zwei Client-Vorrichtungen (10, 20) und zum Übertragen der mittels zumindest eines von der Provider-Vorrichtung (30) zugelassenen Schlüssels (K1, K2) verschlüsselten Mediendaten (MD; MD(K1); MD(K2); MD(C1); MD(C2)) mittels des IP-Protokolls über die eingerichtete Ende-zu-Ende-Verbindung (40) und einem Mittel (50-90), welches dazu geeignet ist, einen Aufbau eines Ende-zu-Ende geschützten Kanals zwischen den zumindest zwei Client-Vorrichtungen (10, 20) zum Übertragen von mit einem von der Provider-Vorrichtung (30) nicht zugelassenen Schlüssel verschlüsselten Mediendaten (MD; MD(K1); MD(K2); MD(C1); MD(C2)) zu verhindern,
**dadurch gekennzeichnet,**
**dass** das Mittel (70) aufweist:
- ein erstes Übertragungsmittel (71), welches dazu eingerichtet ist, die Mediendaten (MD; MD(K1); MD(K2); MD(C1); MD(C2)) mit einer ersten Paketierung (P1) der Pakete des IP-Protokolls zu einer ersten Client-Vorrichtung (10) zu übertragen und von dieser (10) zu empfangen;
- ein zweites Übertragungsmittel (72), welches dazu eingerichtet ist, die Mediendaten (MD; MD(K1); MD(K2); MD(C1); MD(C2)) mit einer zweiten Paketierung (P2) der Pakete des IP-Protokolls zu einer zweiten Client-Vorrichtung (20) zu übertragen und von dieser (20) zu empfangen; und
- ein Umpaketier-Mittel (73), welches dazu eingerichtet ist, die mit der ersten Paketierung (P1) paketierten Mediendaten (MD(P1)) auf die zweite Paketierung (P2) umzupaketieren und die mit der zweiten Paketierung (P2) paketierten Mediendaten (MD(P2)) auf die erste Paketierung (P1) umzupaketieren.

9. Anordnung nach Anspruch 8,
**dadurch gekennzeichnet,**
**dass** die Pakete der Mediendaten (MD(P1): MD(P2)) mittels einer vorbestimmten Verschlüsselung unter Verwendung eines Initialisierungswertes oder eines Initialisierungsvektors verschlüsselt sind.

10. Anordnung nach Anspruch 9,
**dadurch gekennzeichnet,**
**dass** die vorbestimmte Verschlüsselung eine Block-Chiffre im Verkettungsmode oder eine Strom-Chiffre ist.

11. Anordnung nach Anspruch 1 oder einem der Ansprüche 2 bis 10,
**dadurch gekennzeichnet,**
**dass** die Provider-Vorrichtung (30) dazu eingerichtet ist, mittels zumindest eines Schlüssel-Management-Protokolls den Client-Vorrichtungen (10, 20) den zumindest einen Schlüssel (K1, K2) zur Verschlüsselung der Mediendaten (MD; MD(K1); MD(K2); MD(C1); MD(C2)) bereitzustellen.

12. Anordnung nach Anspruch 11,
**dadurch gekennzeichnet,**
**dass** das Schlüssel-Management-Protokoll MIKEY ist.

13. Anordnung nach Anspruch 1 oder einem der Ansprüche 2 bis 12,
**dadurch gekennzeichnet,**
**dass** die Mediendaten (MD; MD(K1); MD(K2); MD(C1); MD(C2)) mittels zumindest eines verschlüsselten Übertragungsprotokolls, insbesondere mittels SRTP (Secure Real-Time Transport Protocol), zwischen den zumindest zwei Client-Vorrichtungen (10, 20) übertragen werden.

14. Verfahren zum Übertragen von Mediendaten (MD; MD(K1); MD(K2); MD(C1); MD(C2)), mit den Schritten:
a) Einrichten einer Ende-zu-Ende-Verbindung (40) zwischen zumindest zwei Client-Vorrichtungen (10, 20) über eine Provider-Vorrichtung (30);
b) Übertragen der mittels zumindest eines von der Provider-Vorrichtung zugelassenen Schlüssels (K1, K2) verschlüsselten Mediendaten (MD; MD(K1); MD(K2); MD(C1); MD(C2)) über die eingerichtete Ende-zu-Ende-Verbindung (40); und
c) Bereitstellen eines Mittels (50-90), welches dazu geeignet ist, einen Aufbau eines Ende-zu-Ende geschützten Kanals zwischen den zumindest zwei Client-Vorrichtungen (10, 20) zum Übertragen von mit einem von der Provider-Vorrichtung (30) nicht zugelassenen Schlüssel verschlüsselten Mediendaten (MD;
MD(K1); MD(K2); MD(C1); MD(C2)) zu verhindern,
**dadurch gekennzeichnet,**
**dass** das Mittel (50) aufweist:
- ein erstes Übertragungsmittel (51), welches dazu eingerichtet ist, die Mediendaten (MD) mit einem ersten Schlüssel (K1) zu verschlüsseln und zu entschlüsseln und die mit dem ersten Schlüssel (K1) verschlüsselten Mediendaten MD(K1) zu einer ersten Client-Vorrichtung (10) zu übertragen und von dieser (10) zu empfangen;
- ein zweites Übertragungsmittel (52), welches dazu eingerichtet ist, die Mediendaten (MD) mit einem zweiten Schlüssel (K2) zu verschlüsseln und zu entschlüsseln und die mit dem zweiten Schlüssel (K2) verschlüsselten Mediendaten (MD(K2)) zu einer zweiten Client-Vorrichtung (20) zu übertragen und von dieser (20) zu empfangen; und
- ein Detektionsmittel (53), welches zur Bereitstellung eines Detektionsergebnisses (E) detektiert, ob die zwischen den Client-Vorrichtungen (10, 20) übertragenen Mediendaten (MD; MD(K1); MD(K2); MD(C1); MD(C2)) mit einem anderen Schlüssel als dem zumindest einen von der Provider-Vorrichtung (30) zugelassenen Schlüssel (K1, K2) verschlüsselt sind;
oder dass das Mittel (50) aufweist:
- ein erstes Übertragungsmittel (61), welches dazu eingerichtet ist, die Mediendaten (MD) mittels eines ersten Codec (C1) zu codieren und zu decodieren und die mit dem ersten Codec (C1) codierten Mediendaten (MD(C1)) zu einer ersten Client-Vorrichtung (10) zu übertragen und von dieser (10) zu empfangen;
- ein zweites Übertragungsmittel (62), welches dazu eingerichtet ist, die Mediendaten (MD) mittels eines zweiten Codec (C2) zu codieren und zu decodieren und die mit dem zweiten Codec (C2) codierten Mediendaten (MD(C2)) zu einer zweiten Client-Vorrichtung (20) zu übertragen und von dieser (20) zu empfangen; und
- ein Umcodier-Mittel (63), welches dazu geeignet ist, die mit dem ersten Codec (C1) codierten Mediendaten (MD(C1)) auf den zweiten Codec (C2) umzucodieren und die mit dem zweiten Codec (C2) codierten Mediendaten (MD(C2)) auf den ersten Codec (C1) umzucodieren;
oder dass das Mittel (50) aufweist:
- ein erstes Übertragungsmittel (71), welches dazu eingerichtet ist, die Mediendaten (MD; MD(K1); MD(K2); MD(C1); MD(C2)) mit einer ersten Paketierung (P1) der Pakete des IP-Protokolls zu einer ersten Client-Vorrichtung (10) zu übertragen und von dieser (10) zu empfangen;
- ein zweites Übertragungsmittel (72), welches dazu eingerichtet ist, die Mediendaten (MD; MD(K1); MD(K2); MD(C1); MD(C2)) mit einer zweiten Paketierung (P2) der Pakete des IP-Protokolls zu einer zweiten Client-Vorrichtung (20) zu übertragen und von dieser (20) zu empfangen; und
- ein Umpaketier-Mittel (73), welches dazu eingerichtet ist, die mit der ersten Paketierung (P1) paketierten Mediendaten (MD(P1)) auf die zweite Paketierung (P2) umzupaketieren und die mit der zweiten Paketierung (P2) paketierten Mediendaten (MD(P2)) auf die erste Paketierung (P1) umzupaketieren.

15. Computerprogramm-Produkt, welches auf einer programmgesteuerten Einrichtung die Durchführung eines Verfahrens nach Anspruch 14 veranlasst.

## Claims

1. Arrangement (100) for transmission of media data (MD; MD (K1); MD (K2); MD (C1); MD (C2)), with
at least two client devices (10, 20), a provider device (30) for setting up an end-to-end connection (40) between the at least two client devices (10, 20) and for transmitting media data (MD; MD (K1); MD (K2); MD (C1); MD (C2)) encrypted by the key (K1, K2) authorised by at least one of the provider devices (30) by means of the IP protocol over the established end-to-end connection (40) and a means (50-90) which is suitable for preventing setting up of an end-to-end protected channel between the at least two client devices (10, 20) for transmission of media data (MD; MD (K1); MD (K2); MD (C1); MD (C2)) encrypted with a key not authorised by the provider device (30),
**characterised in that**,
the means (50) comprises:
- a first transmission means (51), which is configured to encrypt and decrypt the media data (MD) with a first key (K1) and to transmit the media data MD (K1) encrypted with the first key (K1) to a first client device (10)and receive it from said device (10);
- a second transmission means (52), which is configured to encrypt and decrypt the media data (MD) with a second key (K2) and to transmit the media data MD (K2) encrypted with the second key (K2) to a second client device (20) and receive it from said device (20); and
- a detection means (53) which, to provide a detection result (E), detects whether the media data (MD; MD (K1); MD (K2); MD (C1); MD (C2)) transmitted between the client devices is encrypted with a key other than the at least one key (K1, K2) authorised by the provider device (30).

2. Arrangement according to claim 1,
**characterised in that**,
the means (50) has a termination means (54) which, depending on the detection result (E) provided, terminates the end-to-end connection (40) set up between the at least two client devices (10, 20).

3. Arrangement according to claim 2,
**characterised in that**,
the means (50) has a conversion means (55) which is configured to convert media data (MD (K1)) encrypted with the first key (K1) received from the first client device (10) to media data (MD (K2)) encrypted with the second key for transmission to the second client device (20) and to convert media data (MD (K2)) encrypted with the second key (K2) received from the second client device (20) to media data (MD (K1)) encrypted with the first key for transmission to the first client device (10).

4. Arrangement according to claim 2 or 3,
**characterised in that**,
the media data (MD) is encrypted by means of a cryptographic encryption method during encryption by means of the first key (K1) and/or the second key (K2).

5. Arrangement (100) for transmission of media data (MD; MD (K1); MD (K2); MD (C1); MD (C2)), with
at least two client devices (10, 20), a provider device (30) for setting up an end-to-end connection (40) between the at least two client devices (10, 20) and for transmitting media data (MD; MD (K1); MD (K2); MD (C1); MD (C2)) encrypted by the key (K1, K2) approved by at least one of the provider devices (30) by means of the IP protocol over the established end-to-end connection (40) and a means (50-90) which is suitable for preventing setting up of an end-to-end protected channel between the at least two client devices (10, 20) for transmission of media data (MD; MD (K1); MD (K2); MD (C1); MD (C2)) with a key not authorised by the provider device (30), **characterised in that**,
the means (60) comprises:
- a first transmission means (61), which is configured to encode and decode the media data (MD) by means of a first codec (C1) and to transmit the media data (MD (C1)) encoded with the first codec (C1) to a first client device (10) and receive it from said device (10);
- a second transmission means (62), which is configured to encode and decode the media data (MD) by means of a second codec (C2) and to transmit the media data (MD (C2)) encoded with the second codec (C2) to a second client device (20) and receive it from said device (20); and
- a transcoding means (63), which is suitable for transcoding the media data (MD (C1)) encoded with the first codec (C1) to the second codec (C2) and the media data (MD (C2)) encoded with the second codec (C2) to the first codec (C1) .

6. Arrangement according to claim 5,
**characterised in that**
the transcoding means (63) is coupled between the first transmission means (61) and the second transmission means (62).

7. Arrangement according to claim 5 or 6,
**characterised in that**,
the transcoding means (63) is suitable for transcoding media data (MD (C1)) received from the first client device (10) encoded with the first codec (C1) at the second codec (C2) for transmission to the second client device (20) and for transcoding media data (MD (C2)) received from the second client device (20) encoded with the second codec (C2) at the first codec (C1) for transmission to the first client device (10) .

8. Arrangement (100) for transmission of media data (MD; MD (K1); MD (K2); MD (C1); MD (C2)), with
at least two client devices (10, 20), a provider device (30) for setting up an end-to-end connection (40) between the at least two client devices (10, 20) and for transmitting the media data (MD; MD (K1); MD (K2); MD (C1); MD (C2)) encrypted by means of at least one key (K1, K2) authorised by the provider device (30) by means of the IP protocol over the established end-to-end connection (40) and a means (50-90) which is suitable for preventing setting up of an end-to-end protected channel between the at least two client devices (10, 20) for transmission of media data (MD; MD (K1); MD (K2); MD (C1); MD (C2)) with a key not authorised by the provider device (30),
**characterised in that**
the means (70) comprises:
- a first transmission means (71) which is configured for transmitting the media data (MD; MD (K1); MD (K2); MD (C1); MD (C2)) with a first packetizing (P1) of the packets of the IP protocol to a first client device (10) and receiving them from said device (10);
- a second transmission means (72), which is configured for transmitting the media data (MD; MD (K1); MD (K2); MD (C1); MD (C2)) with a second packetizing (P2) of the packets of the IP protocol to a second client device (20) and receiving them from said device (20); and
- a packet conversion means (73), which is configured for converting the media data (MD (P1)) packetized with the first packetizing (P1) to the second packetizing (P2) and converting the media data (MD (P2)) packetized with the second packetizing (P2) to the first packetizing (P1).

9. Arrangement according to claim 8,
**characterised in that**
the packets of the media data (MD (P1); MD (P2)) are encrypted by means of predefined encryption using an initialisation value or an initialisation vector.

10. Arrangement according to claim 9,
**characterised in that**
the predefined encryption is a block cipher in chaining mode or a stream cipher.

11. Arrangement according to claim 1 or one of claims 2 to 10, **characterised in that**
the provider device (30) is configured, by means of at least one key management protocol to provide the client devices (10, 20) with the at least one key (K1, K2) for encryption of the media data (MD; MD (K1); MD (K2); MD (C1); MD (C2)).

12. Arrangement according to claim 11,
**characterised in that**,
the key management protocol is MIKEY.

13. Arrangement according to claim 1 or one of claims 2 to 12, **characterised in that**,
the media data (MD; MD (K1); MD (K2); MD (C1); MD (C2)) is transmitted by means of at least one encrypted transmission protocol, especially by means of SRTP (Secure Real-Time Transport Protocol), between the at least two client devices (10, 20).

14. Method for transmission of media data (MD; MD (K1); MD (K2); MD (C1); MD (C2)), with the following steps:
a) Setting up an end-to-end connection (40) between at least two client devices (10, 20) via a provider device (30);
b) Transmission of the media data (MD; MD (K1); MD (K2); MD (C1); MD (C2)) encrypted by means of at least one key (K1, K2) approved by the provider device over the established end-to-end connection (40); and
c) Provision of a means (50-90) which is suitable for preventing setting up of an end-to-end protected channel between the at least two client devices (10, 20) for transmission of media data (MD; MD (K1); MD (K2); MD (C1); MD (C2)) with a key not authorised by the provider device (30), **characterised in that**
the means (50) comprises:
- a first transmission means (51), which is configured to encrypt and decrypt the media data (MD) with a first key (K1) and to transmit the media data MD (K1) encrypted with the first key (K1) to a first client device (10)and receive it from said device (10);
- a second transmission means (52), which is configured to encrypt and decrypt the media data (MD) with a second key (K2) and to transmit the media data MD (K2) encrypted with the second key (K2) to a second client device (20) and receive it from said device (20); and
- a detection means (53) which, to provide a detection result (E) detects whether the media data (MD; MD (K1); MD (K2); MD (C1); MD (C2)) transmitted between the client devices is encrypted with a key other than the at least one key (K1, K2) authorised by the provider device (30);
or that the means (50) comprises:
- a first transmission means (61), which is configured to encode and decode the media data (MD) by means of a first codec (C1) and to transmit the media data (MD (C1)) encoded with the first codec (C1) to a first client device (10) and receive it from said device (10);
- a second transmission means (62), which is configured to encode and decode the media data (MD) by means of a second codec (C2) and to transmit the media data (MD (C2)) encoded with the second codec (C2) to a second client device (20) and receive it from said device (20); and
- a transcoding means (63), which is suitable for transcoding the media data (MD (C1)) encoded with the first codec (C1) at the second codec (C2) and the media data (MD (C2)) encoded with the second codec (C2) at the first codec (C1);
or that the means (50) comprises:
- a first transmission means (71) which is configured for transmitting the media data (MD; MD (K1); MD (K2); MD (C1); MD (C2)) with a first packetizing (P1) of the packets of the IP protocol to a first client device (10)and receiving them from said device (10);
- a second transmission means (72), which is configured for transmitting the media data (MD; MD (K1); MD (K2); MD (C1); MD (C2)) with a second packetizing (P2) of the packets of the IP protocol to a second client device (20)and receiving them from said device (20); and
- a packet conversion means (73), which is configured for converting the media data (MD (P1)) packetized with the first packetizing (P1) to the second packetizing (P2) and converting the media data (MD (P2)) packetized with the second packetizing (P2) to the first packetizing (P1).

15. Computer program product which causes a method in accordance with claim 14 to be executed on a program-controlled device.

## Revendications

1. Agencement (100) de transmission de données médias (MD ; MD(K1) ; MD(K2) ; MD(C1) ; MD(C2)), comprenant
au moins deux dispositifs client (10, 20), un dispositif fournisseur (30) destiné à configurer une connexion de bout en bout (40) entre les au moins deux dispositifs client (10, 20) et à transmettre les données médias (MD ; MD(K1) ; MD(K2) ; MD(C1) ; MD(C2)) chiffrées à l'aide d'au moins une clé (K1, K2) autorisée par le dispositif fournisseur (30), au moyen du protocole IP, via la connexion de bout en bout (40) configurée, et un moyen (50-90) apte à empêcher d'établir une voie protégée de bout en bout entre les au moins deux dispositifs client (10, 20) pour transmettre des données médias (MD ; MD(K1) ; MD(K2) ; MD(C1) ; MD(C2)) chiffrées avec une clé non autorisée par le dispositif fournisseur (30), **caractérisé**
**en ce que** le moyen (50) comprend :
- un premier moyen de transmission (51), lequel est configuré pour chiffrer et déchiffrer les données médias (MD) avec une première clé (K1) et pour transmettre les données médias (MD(K1)) chiffrées avec la première clé (K1) vers un premier dispositif client (10) et les recevoir de celui-ci (10) ;
- un deuxième moyen de transmission (52), lequel est configuré pour chiffrer et déchiffrer les données médias (MD) avec une deuxième clé (K2) et pour transmettre les données médias (MD(K2)) chiffrées avec la deuxième clé (K2) vers un deuxième dispositif client (20) et les recevoir de celui-ci (20); et
- un moyen de détection (53), lequel, dans le but de fournir un résultat de détection (E), détecte si les données médias (MD ; MD(K1) ; MD(K2) ; MD(C1) ; MD(C2)) transmises entre les dispositifs client (10, 20) sont chiffrées avec une autre clé que la au moins une clé (K1, K2) autorisée par le dispositif fournisseur (30).

2. Agencement selon la revendication 1,
**caractérisé**
**en ce que** le moyen (50) comprend un moyen de terminaison (54), lequel termine la connexion de bout en bout (40) configurée entre les au moins deux dispositifs client (10, 20) en fonction du résultat de détection (E) fourni.

3. Agencement selon la revendication 2,
**caractérisé**
**en ce que** le moyen (50) comprend un moyen de transchiffrement (55), lequel est configuré pour transchiffrer des données médias (MD(K1)) reçues du premier dispositif client (10) et chiffrées avec la première clé (K1) sur des données médias (MD(K2) chiffrées avec la deuxième clé (K2) pour la transmission au deuxième dispositif client (20), et pour transchiffrer des données médias (MD(K2)) reçues du deuxième dispositif client (20) et chiffrées avec la deuxième clé (K2) sur des données médias (MD(K1) chiffrées avec la première clé (K1) pour la transmission au premier dispositif client (10).

4. Agencement selon la revendication 2 ou 3,
**caractérisé**
**en ce que** lors du chiffrement au moyen de la première clé (K1) et/ou de la deuxième clé (K2), les données médias (MD) sont chiffrées au moyen d'un procédé de chiffrement cryptographique.

5. Agencement (100) de transmission de données médias (MD ; MD(K1) ; MD(K2) ; MD(C1) ; MD(C2)), comprenant
au moins deux dispositifs client (10, 20), un dispositif fournisseur (30) destiné à configurer une connexion de bout en bout (40) entre les au moins deux dispositifs client (10, 20) et à transmettre les données médias (MD ; MD(K1) ; MD(K2) ; MD(C1) ; MD(C2)) chiffrées à l'aide d'au moins une clé (K1, K2) autorisée par le dispositif fournisseur (30), au moyen du protocole IP, via la connexion de bout en bout (40) configurée, et un moyen (50-90) apte à empêcher d'établir une voie protégée de bout en bout entre les au moins deux dispositifs client (10, 20) pour transmettre des données médias (MD ; MD(K1) ; MD(K2) ; MD(C1) ; MD(C2)) chiffrées avec une clé non autorisée par le dispositif fournisseur (30), **caractérisé**
**en ce que** le moyen (60) comprend :
- un premier moyen de transmission (61), lequel est configuré pour coder et décoder les données médias (MD) au moyen d'un premier codec (C1) et pour transmettre les données médias (MD(C1)) codées avec le premier codec (C1) vers un premier dispositif client (10) et les recevoir de celui-ci (10) ;
- un deuxième moyen de transmission (62), lequel est configuré pour coder et décoder les données médias (MD) au moyen d'un deuxième codec (C2) et pour transmettre les données médias (MD(C2)) codées avec le deuxième codec (C2) vers un deuxième dispositif client (20) et les recevoir de celui-ci (20) ; et
- un moyen de transcodage (63), lequel est apte à transcoder les données médias (MD(C1) codées avec le premier codec (C1) sur le deuxième codec (C2) et à transcoder les données médias (MD(C2) codées avec le deuxième codec (C2) sur le premier codec (C1).

6. Agencement selon la revendication 5,
**caractérisé**
**en ce que** le moyen de transcodage (63) est couplé entre le premier moyen de transmission (61) et le deuxième moyen de transmission (62).

7. Agencement selon la revendication 5 ou 6,
**caractérisé**
**en ce que** le moyen de transcodage (63) est apte à transcoder des données médias (MD(C1)) reçues du premier dispositif client (10) et codées avec le premier codec (C1) sur le deuxième codec (C2) pour la transmission au deuxième dispositif client (20), et à transcoder des données médias (MD(C2)) reçues du deuxième dispositif client (20) et codées avec le deuxième codec (C2) sur le premier codec (C1) pour la transmission au premier dispositif client (10).

8. Agencement (100) de transmission de données médias (MD ; MD(K1) ; MD(K2) ; MD(C1) ; MD(C2)), comprenant
au moins deux dispositifs client (10, 20), un dispositif fournisseur (30) destiné à configurer une connexion de bout en bout (40) entre les au moins deux dispositifs client (10, 20) et à transmettre les données médias (MD ; MD(K1) ; MD(K2) ; MD(C1) ; MD(C2)) codées à l'aide d'au moins une clé (K1, K2) autorisée par le dispositif fournisseur (30), au moyen du protocole IP, via la connexion de bout en bout (40) configurée, et un moyen (50-90) apte à empêcher d'établir une voie protégée de bout en bout entre les au moins deux dispositifs client (10, 20) pour transmettre des données médias (MD ; MD(K1) ; MD(K2) ; MD(C1) ; MD(C2)) codées avec une clé non autorisée par le dispositif fournisseur (30), **caractérisé**
**en ce que** le moyen (70) comprend :
- un premier moyen de transmission (71), lequel est configuré pour transmettre les données médias (MD ; MD(K1) ; MD(K2) ; MD(C1) ; MD(C2)) à l'aide d'un premier paquetage (P1) des paquets du protocole IP vers un premier dispositif client (10) et pour les recevoir de celui-ci (10),
- un second moyen de transmission (72), lequel est configuré pour transmettre les données médias (MD ; MD(K1) ; MD(K2) ; MD(C1) ; MD(C2)) à l'aide d'un deuxième paquetage (P2) des paquets du protocole IP vers un deuxième dispositif client (20) et pour les recevoir de celui-ci (20) ; et
- un moyen de transpaquetage (73), lequel est configuré pour transpaqueter les données médias (MD(P1) paquetées à l'aide du premier paquetage (P1) sur le deuxième paquetage (P2) et pour transpaqueter les données médias (MD(P2) paquetées à l'aide du deuxième paquetage (P2) sur le premier paquetage (P1).

9. Agencement selon la revendication 8,
**caractérisé**
**en ce que** les paquets des données médias (MD(P1) ; MD(P2)) sont chiffrés au moyen d'un chiffrement prédéterminé, en utilisant une valeur d'initialisation ou un vecteur d'initialisation.

10. Agencement selon la revendication 9
**caractérisé**
**en ce que** le chiffrement prédéterminé est un chiffrement par bloc en mode chaînage ou un chiffrement par flot.

11. Agencement selon la revendication 1 et l'une des revendications 2 à 10,
**caractérisé**
**en ce que** le dispositif fournisseur (30) est configuré pour fournir aux dispositifs client (10, 20) la au moins une clé (K1, K2) de chiffrement des données médias (MD ; MD(K1) ;
MD(K2) ; MD(C1) ; MD(C2)), au moyen d'au moins un protocole de gestion de clés.

12. Agencement selon la revendication 11,
**caractérisé**
**en ce que** le protocole de gestion de clés est MIKEY.

13. Agencement selon la revendication 1 ou l'une des revendications 2 à 12,
**caractérisé**
**en ce que** les données médias (MD ; MD(K1) ; MD(K2) ; MD(C1) ; MD(C2)) sont transmises entre les au moins deux dispositifs client (10, 20) au moyen d'au moins un protocole de transmission chiffrée, en particulier au moyen de SRTP (Secure Real-Time Transport Protocol).

14. Procédé de transmission de données médias (MD ; MD(K1) ; MD(K2) ; MD(C1) ; MD(C2)), comprenant les étapes :
a) configuration d'une connexion de bout en bout (40) entre au moins deux dispositifs client (10, 20) par un dispositif fournisseur (30) ;
b) transmission des données médias (MD ; MD(K1) ; MD(K2) ; MD(C1) ; MD(C2)) chiffrées au moyen d'au moins une clé (K1, K2) autorisée par le dispositif fournisseur via la connexion de bout en bout (40) configurée ; et
c) mise à disposition d'un moyen (50-90) apte à empêcher d'établir une voie protégée de bout en bout entre les au moins deux dispositifs client (10, 20) pour transmettre des données médias (MD ; MD(K1) ; MD(K2) ; MD(C1) ; MD(C2)) chiffrées à avec une clé non autorisée par le dispositif fournisseur (30), **caractérisé**
**en ce que** le moyen (50) comprend :
- un premier moyen de transmission (51), lequel est configuré pour chiffrer et déchiffrer les données médias (MD) avec une première clé (K1) et pour transmettre les données médias (MD(K1)) chiffrées avec la première clé (K1) vers un premier dispositif client (10) et les recevoir de celui-ci (10);
- un deuxième moyen de transmission (52), lequel est configuré pour chiffrer et déchiffrer les données médias (MD) avec une deuxième clé (K2) et pour transmettre les données médias (MD(K2)) chiffrées avec la deuxième clé (K2) vers un deuxième dispositif client (20) et les recevoir de celui-ci (20); et
- un moyen de détection (53), lequel, dans le but de fournir un résultat de détection (E), détecte si les données médias (MD ; MD(K1) ; MD(K2) ; MD(C1) ; MD(C2)) transmises entre les dispositifs client (10, 20) sont chiffrées avec une autre clé que la au moins une clé (K1, K2) autorisée par le dispositif fournisseur (30) ;
ou en ce que le moyen (50) comprend :
- un premier moyen de transmission (61), lequel est configuré pour coder et décoder les données médias (MD) au moyen d'un premier codec (C1) et pour transmettre les données médias (MD(C1)) codées avec le premier codec (C1) vers un premier dispositif client (10) et les recevoir de celui-ci (10) ;
- un deuxième moyen de transmission (62), lequel est configuré pour coder et décoder les données médias (MD) au moyen d'un deuxième codec (C2) et pour transmettre les données médias (MD(C2)) codées avec le deuxième codec (C2) vers un deuxième dispositif client (20) et les recevoir de celui-ci (20) ; et
- un moyen de transcodage (63), lequel est apte à transcoder les données médias (MD(C1) codées avec le premier codec (C1) sur le deuxième codec (C2) et à transcoder les données médias (MD(C2) codées avec le deuxième codec (C2) sur le premier codec (C1) ;
ou en ce que le moyen (50) comprend :
- un premier moyen de transmission (71), lequel est configuré pour transmettre les données médias (MD ; MD(K1) ; MD(K2) ; MD(C1) ; MD(C2)) à l'aide d'un premier paquetage (P1) des paquets du protocole IP vers un premier dispositif client (10) et pour les recevoir de celui-ci (10),
- un second moyen de transmission (72), lequel est configuré pour transmettre les données médias (MD ; MD(K1) ; MD(K2) ; MD(C1) ; MD(C2)) à l'aide d'un deuxième paquetage (P2) des paquets du protocole IP vers un deuxième dispositif client (20) et pour les recevoir de celui-ci (20) ; et
- un moyen de transpaquetage (73), lequel est configuré pour transpaqueter les données médias (MD(P1) paquetées à l'aide du premier paquetage (P1) sur le deuxième paquetage (P2) et pour transpaqueter les données médias (MD(P2) paquetées à l'aide du deuxième paquetage (P2) sur le premier paquetage (P1).

15. Produit programme d'ordinateur, lequel fait procéder à la mise en oeuvre d'un procédé selon la revendication 14 sur un dispositif commandé par programme.
